# FASCICULE DE BREVET EUROPEEN

(11) **EP 2 489 573 B1**
(45) Date de publication et mention de la délivrance du brevet: **08.07.2015**
(21) Numéro de dépôt: 12155443.0
(22) Date de dépôt: 14.02.2012
(51) Int. Cl.: B62B 5/00, B62B 5/04

(54) **Chariot d'atelier à démarrage assisté manuellement**
Fahrzeug mit manueller Hilfsstartvorrichtung
Hand cart with manually assisted starting

(30) Priorité: 16.02.2011 FR 1151256
(43) Date de publication de la demande: 22.08.2012
(73) Titulaire: Coutier Industrie, 57970 Basse Ham (FR)
(72) Inventeur: Coutier, Charles, 57570 Cattenom (FR)
(74) Mandataire: Lavialle, Bruno François Stéphane

(56) Documents cités:
- WO-A1-95/34463
- CH-A- 112 016
- FR-A1- 2 919 253
- US-A- 3 917 171
- US-A1- 2004 066 016

## Description

La présente invention concerne les chariots de manutention que l'on emploie par exemple dans les ateliers de montage de l'industrie automobile pour notamment déstocker des composants d'un magasin, les apporter et les présenter au lieu de leur utilisation.

### ARRIERE PLAN DE L'INVENTION

Ces chariots sont en général associés en un train de chariots, traîné par un véhicule motorisé depuis le lieu de déstockage jusqu'à la ligne de montage. Ils demandent une manoeuvre manuelle pour former le train ou le dissocier. Cette manipulation est un facteur de pénibilité de la tâche de l'opérateur qu'il est nécessaire de réduire au maximum pour satisfaire aux dispositions de plus en plus exigeantes qui régissent les conditions de travail.

On sait que la pénibilité tient à l'effort que l'opérateur doit développer pour mettre en mouvement le chariot lorsqu'il est chargé. Il faut en effet vaincre l'inertie de la charge ainsi que la résistance qu'offre le sol au roulement du chariot (irrégularités du sol, particules, ...).

Il a déjà été proposé des dispositifs d'aide au démarrage de ce type de chariots pour remédier à cette demande d'effort peu ergonomique.

Il s'agit tout d'abord des dispositifs de motorisation d'au moins un essieu du chariot. Ces dispositifs ont pour principal inconvénient de devoir faire appel à une source d'énergie embarquée, notamment une batterie d'accumulation d'énergie électrique. Cette batterie est associée à un moteur en prise avec l'essieu et des moyens de commande du moteur à la disposition de l'opérateur. On comprend qu'un chariot ainsi équipé est un matériel lourd qui, surtout, doit être inscrit dans une procédure de maintenance souvent rédhibitoire par rapport à la fonction du produit en termes d'investissements et de coûts de fonctionnement.

Il existe également des dispositifs d'assistance au démarrage qui comportent des composants permettant d'emmagasiner de l'énergie dérivée de celle dépensée par le véhicule moteur lors du déplacement du train de chariot. On citera à titre d'exemple le document FR 2 899 550.

Il existe enfin des dispositifs d'assistance au démarrage qui utilisent l'énergie musculaire développée par l'opérateur mais dans des conditions ergonomiques et économes. On citera à ce propos le document FR 2 613 996 qui décrit un couplage entre le timon de manoeuvre manuelle d'un transpalette et son essieu avant, par lequel tout pivotement du timon se traduit par un entraînement en rotation de cet essieu (transmission par chaîne et roue dentée ou par un jeu de pignons coniques). Dans le document DE 1 254 496, l'axe de pivotement du timon de manoeuvre et l'axe de la roue sont confondus et le basculement du timon est transmis à la roue par un mécanisme à cliquet débrayable.

Il existe enfin une dernière sorte de mécanismes d'assistance au démarrage qui opère à la manière d'un levier du second genre. Ce levier, lié au bâti du chariot, prend appui par l'une de ses extrémités sur le sol de roulement du chariot. Cette extrémité devient alors un point fixe de pivotement inférieur, le levier étant manoeuvré manuellement autour de ce point de pivotement par son autre extrémité et dans le sens d'avancement à imprimer au chariot. Ainsi la zone de liaison du levier au chariot (donc le chariot) est déplacée sous un effort plus important mais sur une plus faible amplitude que le déplacement résultant de l'effort développé par l'opérateur manoeuvrant l'extrémité supérieure du levier. On citera, comme illustration de ce genre d'appareils, le document FR 2 919 253 qui décrit un chariot de manutention selon le préambule de la revendication 1.

L'invention concerne un autre mécanisme d'assistance au démarrage qui met en application un levier du second genre avec une structure de transmission d'efforts telle que la manoeuvre par l'opérateur soit simple, que le chariot puisse être, du même point de manoeuvre, assisté au démarrage dans les deux sens possibles de son déplacement et que le chariot puisse être immobilisé par ce même mécanisme.

### OBJET DE L'INVENTION

C'est ainsi que l'invention a pour objet un chariot de manutention comportant une plateforme roulante, un levier de démarrage du chariot avec une première partie, une deuxième partie coopérant avec un organe de son contact avec le sol et une partie intermédiaire située entre les première et deuxième parties et reliée à la plateforme avec une liberté de pivotement par rapport à cette dernière, la partie intermédiaire du levier exerçant, dans l'un - moteur- des deux sens de pivotement du levier, un effort sur la plateforme qui entraîne le déplacement de cette dernière dans un sens correspondant au sens de pivotement moteur du levier, **caractérisé en ce que** la liaison de la plate forme et du levier est une articulation d'axe perpendiculaire à la direction du déplacement à imprimer au chariot et en ce que l'organe de contact est un patin compressible, tourné vers le sol et porté par l'extrémité libre d'une bielle, articulée par son autre extrémité à la seconde partie du levier, l'extrémité libre de la bielle étant montée à glissement contre une piste inférieure d'une came solidaire de la plateforme pour assurer et maintenir la compression du patin en appui sur le sol pendant le pivotement moteur du levier.

De manière préférée la piste en question présente une rampe initiale qui tend à comprimer progressivement le patin puis une portion sensiblement parallèle au sol.

La came présente également une piste supérieure, symétrique par rapport à un point de la piste inférieure, pour soutenir le patin compressible hors de son contact avec le sol lors du pivotement du levier dans l'autre sens non moteur de son pivotement.

Dans une variante de réalisation réversible, pour répondre à un besoin de manoeuvrer le chariot tant en le poussant qu'en le tirant, les rampes de chaque piste sont réversibles.

Dans une autre variante de l'invention, la came est située sensiblement sous le centre de la plateforme.

De manière préférée, l'invention comporte des moyens d'indexation du levier dans une position intermédiaire d'au moins son pivotement moteur. Le patin compressible agit alors comme un frein du chariot. Ces moyens d'indexation peuvent être opérant pour le levier dans une position intermédiaire de son autre pivotement. Il s'agit alors d'une position hors service du mécanisme d'aide au démarrage selon l'invention dans laquelle le patin est maintenu hors du contact avec le sol.

On notera une caractéristique supplémentaire de l'invention en ce que le patin est monté autour d'un axe de pivotement, par exemple sur une butée à billes, sensiblement perpendiculaire à la bielle qui le porte de sorte qu'en position frein et dans la version de l'invention qui propose de placer la came au centre de la plateforme, le patin constitue un pivot du chariot par rapport au sol et donc un moyen de l'orienter dans un repère extérieur sans avoir recours au plateau tournant usuellement utilisé pour satisfaire ce besoin d'orientation.

En ce qui concerne la structure de la came et du patin, un mode de réalisation consiste à atteler à la bielle un chariot pourvu de deux galets montés chacun dans un guide fermé autour de la came, le patin étant formé d'un pantographe attaché par l'un de ses sommets audit chariot et soumis à l'effet d'un ressort tendant à l'étendre, son autre sommet étant formé d'une pièce inférieure antidérapante.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- les figures 1 à 4 sont des schémas de principe de la structure et du fonctionnement du dispositif conforme à l'invention, dans un premier état de celui-ci
- les figures 5 et 6 sont des schémas de principe du fonctionnement du dispositif des figures précédentes dans un deuxième état de celui-ci,
- la figure 7 est une vue de côté d'un chariot conforme à l'invention illustrant quelques variantes de réalisation de celle-ci,
- la figure 8 illustre une réalisation particulière de l'organe de contact selon l'invention.

### DESCRIPTION DETAILLEE DE L'INVENTION

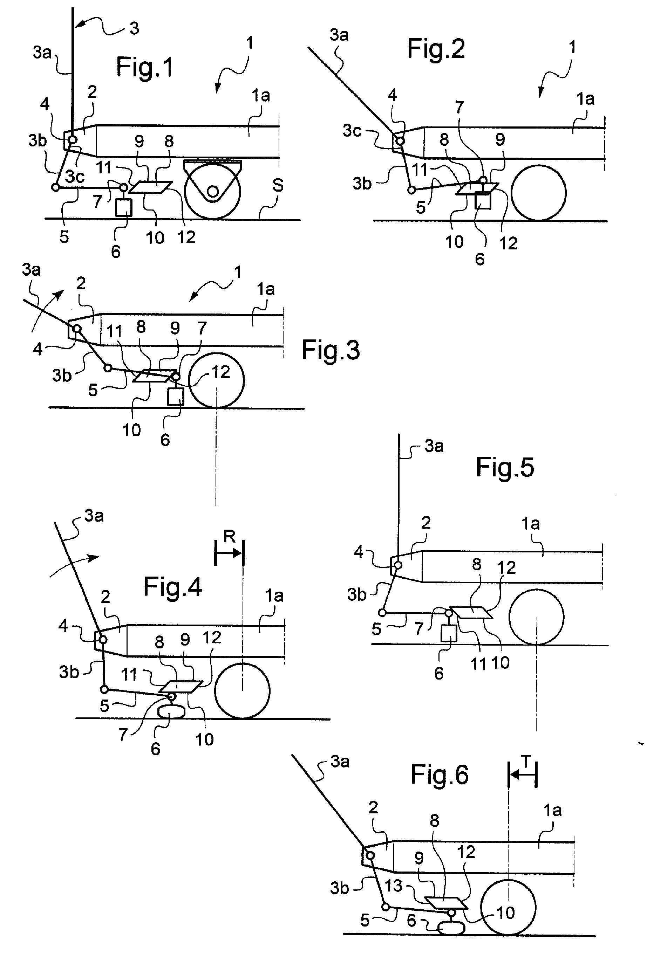

A la figure 1, on a représenté un chariot 1 dont la plateforme ou base roulante la possède à l'une 2 de ses extrémités une poignée de manoeuvre non représentée. L'extrémité 2 sera choisie comme étant l'extrémité avant de la base roulante.

Selon l'invention, le châssis de cette plateforme est équipé d'un levier 3 divisé en une première partie supérieure 3a et une deuxième partie inférieure 3b. Le levier est coudé entre ces deux parties et le coude constitue une partie intermédiaire 3c par laquelle le levier est relié au châssis de la plateforme 1a. Cette liaison est une articulation autour d'un axe 4 porté par le châssis de la base roulante, perpendiculaire au plan de la figure et parallèle au sol S sur lequel roule le chariot.

Le coude entre les parties 3a et 3b est tel que, lorsque la partie 3a est sensiblement verticale c'est-à-dire dans le plan de la poignée 2, l'extrémité inférieure de la partie 3b est éloignée de l'extrémité de la base roulante. On parvient ainsi à répartir le débattement de la partie 3b du levier sensiblement également de chaque côté de sa position verticale.

Une bielle 5 est articulée à l'extrémité de cette partie inférieure 3b et porte à son autre extrémité un patin compressible 6 qui est articulé de manière pendulaire à la bielle 5. L'articulation est d'axe parallèle à l'axe 4 et un galet 7 est porté à cet endroit par la bielle 5 libre en rotation autour de cet axe d'articulation. L'amplitude de pivotement du patin à l'extrémité de la bielle est limitée par tout moyen approprié, à quelques degrés pour permettre un bon appui du patin au sol.

Une came 8, solidaire ou fixée au châssis la de la base roulante, présente une piste supérieure 9 et une piste inférieure 10. Ces deux pistes comportent, à l'une leurs extrémités, par deux rampes initiales 11 et 12. Dans le cas de la figure 1, les rampes 11 et 12 sont ascendantes depuis l'avant vers l'arrière de la base roulante.

La figure 2 illustre l'état du mécanisme alors qu'un opérateur s'apprête à pousser le chariot vers la droite des figures. Pour ce faire, il s'empare du levier 3 et le ramène à lui. Le galet 7 est ainsi forcé à rouler sur la rampe 11 de la came 8 pour ensuite rouler sur la piste supérieure 9 de cette dernière. A la fin de cette course qui est une course d'armement du mécanisme, le galet 7 échappe de la came et le patin 6 tombe sur le sol.

Le mécanisme est alors dans son état de la figure 3. L'opérateur inverse le pivotement du levier 3. Ce mouvement a deux conséquences: forcer le galet 7 à passer sous la rampe 12 donc à écraser le patin compressible et assurer un point d'appui au sol pour ce patin ce qui se traduit par une poussée vers la droite de la figure du chariot 1 par le levier 3 au niveau de l'articulation 4.

Le mécanisme passe alors dans son état de la figure 4 dans lequel le galet 7 a roulé sous la piste inférieure 10 de la came. Le chariot a avancé d'une distance R entre les figures 3 et 4 sous un effort, démultiplié par l'effet du bras de levier, peu important fourni par l'opérateur sur la poignée supérieure du levier 3. Le galet 7 échappe alors de la piste inférieure 10 et revient dans sa position de la figure 1 ou il est en regard de la rampe 11. Le patin est décollé du sol S et le levier est dans sa position de repos.

L'aide au démarrage du chariot a donc été réalisée sous un effort de poussée minime et acceptable de l'opérateur.

A partir de son état de la figure 1, le chariot peut devoir être manoeuvré dans l'autre sens. Dans ce cas, un mécanisme dont une réalisation est décrite ci-après, permet d'inverser la rampe des pistes 11 et 12. On peut par exemple prévoir, pour cette inversion, de retourner la came en la faisant pivoter d'un demi-tour autour d'un axe vertical de sa fixation sous la plateforme. La figure 5 illustre alors le chariot prêt à être tirer vers la gauche de la figure. Dans ce mouvement, le patin 6 est écrasé sur le sol par la rampe 13 agissant sur le galet 7 et est maintenu dans cet état par la piste inférieure 10. Il constitue un point fixe par rapport auquel le chariot est déplacé au fur et à mesure de l'abaissement du levier 3 et le chariot a été déplacé d'une distance T de la figure 5 à la figure 6. A la fin du mouvement, le galet échappe de la piste inférieure 10 et remonte sur la piste supérieure 9 par la rampe 14 lorsque l'opérateur relève le levier pour le placer dans sa position de repos (patin éloigné du sol).

Si on arrête le mouvement du levier alors que le patin est encore comprimé sous la came 8, on a réalisé un frein pour le chariot

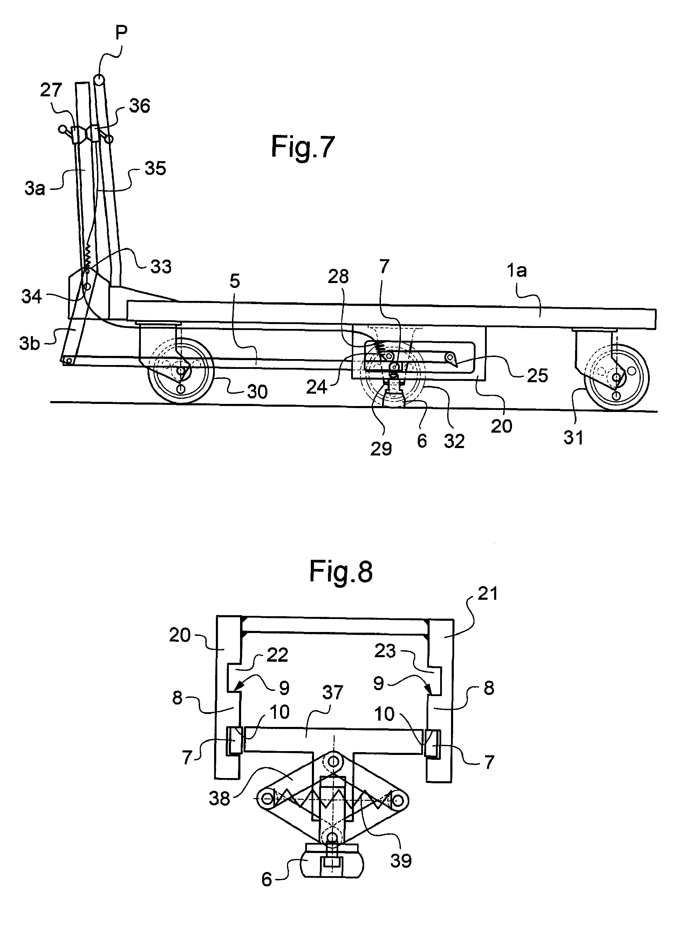

Dans les schémas ci-dessus, le mécanisme d'assistance au démarrage est placé sous l'avant 2 de la plateforme. A la figure 7 ce mécanisme est disposé sous la partie médiane de cette plateforme. Il est constitué (voir également la figure 8) de deux plaques 20 et 21 dans lesquelles sont usinées des gorges rectangulaires 22 et 23 définissant les pistes 9 et 10 autour d'une partie centrale qui forme la came 8. Une partie en forme de bec articulé 24 et 25 termine chaque extrémité de la came 8 de sorte que selon la position prise par ces becs, on réalise les pistes inclinées soit 11 et 12, soit 13 et 14.

A la figure 7 on a schématisé un moyen de commande de la position de ces becs ; il s'agit d'un système, à gaine et câble 26, qui est actionné par une manette 27 située sur le levier 3. Une synchronisation mécanique par chaîne - ou autre - permet par une seule action sur la manette de déplacer les becs articulés entre l'état représenté à la figure 7, qui correspond au schémas des figures 5 et 6, l'aide au démarrage s'exerçant en tirant sur le chariot, et l'état (non représenté) qui correspond à celui des figures 1 à 4, c'est-à-dire le bec 24 abaissé et le bec 25 relevé pour disposer de l'assistance au démarrage en poussant le chariot. On notera sur la figure 7 que le bec 25 (abaissé) peut se soulever élastiquement (et l'autre bec s'abaisser en synchronisme) au passage du galet à la fin de la piste 10 et se rabattre (l'autre bec se relevant dans le même temps) automatiquement après ce passage sous l'effet d'un ressort 28 de rappel incorporé dans le système gaine-câble 26. Il en sera de même dans l'autre état des becs.

A la figure 7, sur laquelle on a représenté la poignée P de manoeuvre du chariot, le patin compressible est comprimé sur le sol, au centre de la base roulante. Il constitue à la fois un frein pour cette base et un point de pivot de celle-ci, si le patin est monté par rapport au châssis de la base, sur une butée à bille 29. En effet dans ce type de bases roulantes, les roues avant 30 et arrière 31 (seules ou par paires) sont montées folles alors qu'au centre, la base est pourvue d'un essieu fixe 32.

Cet état du mécanisme d'assistance au démarrage, dans lequel le chariot est freiné - et peut être pivoté si le point d'appui du patin au sol est sensiblement au niveau de l'axe du moyeu central de la base roulante - peut être verrouillé par l'engagement d'un doigt 33 porté par le levier dans une encoche 34 porté par la structure de la base roulante. L'engagement ou le dégagement de ce doigt par rapport à l'encoche est aussi commandé par un mécanisme à gaine et câble 35 avec manette de manoeuvre 36 sur le levier.

La structure de patin représentée à la figue 8 consiste en une traverse 37, équipée en extrémité des galets 7 et portant le patin 6, qui peut ne pas être compressible, à coulissement perpendiculaire à la traverse. Un parallélogramme ou pantographe articulé 38, associé à un ressort 39, coopère au maintien du patin par rapport à la traverse et contribue la définition de la résistance du coulissement du patin par rapport à la traverse. La traverse 37 est bien entendu articulée ou montée de manière pendulaire avec une amplitude de pivotement limitée par des butées adéquates, à l'extrémité de la bielle 5 dont on notera la longueur importante sur la figure 7, soit dans l'axe des galets 7, soit autour d'un axe distinct.

La figure 8 illustre le fait que le patin compressible peut prendre une autre forme qu'une masse d'élastomère intrinsèquement compressible. Un autre mode de réalisation peut être sous la forme d'un pied télescopique avec un ressort de compression.

Il faut enfin noter que le levier 3 de l'invention peut être confondu avec la main courante ou poignée de la base roulante telle qu'elle est habituellement présente sur de tels appareils. Seules son attache au bâti de la base et sa liaison au mécanisme du patin seront modifiées pour pouvoir remplir cette fonction d'aide au démarrage.

## Revendications

1. Chariot (1) de manutention comportant une plateforme roulante (1a), un levier (3) de démarrage du chariot avec une première partie (3a), une deuxième partie (3b) coopérant avec un organe (6) de son contact avec le sol (S) et une partie intermédiaire (3c) située entre les première et deuxième parties et reliée à la plateforme (1a) avec une liberté de pivotement par rapport à cette dernière, la partie intermédiaire (3c) du levier exerçant, dans l'un - moteur- des deux sens de pivotement du levier, un effort sur la plateforme (1a) qui entraîne le déplacement de cette dernière dans un sens correspondant au sens de pivotement moteur du levier (3), la liaison de la plate forme et du levier étant une articulation d'axe (4) perpendiculaire à la direction du déplacement à imprimer au chariot (1), l'organe de contact étant un patin compressible (6), tourné vers le sol (S), le chariot de manutention étant **caractérisé en ce que** le patin est porté par l'extrémité libre d'une bielle (5), articulée par son autre extrémité à la seconde partie (3b) du levier, l'extrémité libre de la bielle (5) étant montée à glissement contre une piste inférieure (10) d'une came (8) solidaire de la plateforme (1a) pour assurer et maintenir la compression du patin (6) en appui sur le sol pendant le pivotement moteur du levier.

2. Chariot selon la revendication 1, **caractérisé en ce que** la piste (10) en question présente une rampe initiale (12,13) qui tend à comprimer progressivement le patin puis une portion (10) sensiblement parallèle au sol.

3. Chariot selon l'une des revendications précédentes, **caractérisé en ce que** la came (8) présente également une piste supérieure (9), symétrique par rapport à un point de la piste inférieure (10), pour soutenir le patin compressible (6) hors de son contact avec le sol lors du pivotement du levier (3) dans l'autre sens non moteur de son pivotement.

4. Chariot selon la revendication 3, les rampes (11,12) de chaque piste (9,10) sont réversibles (13,14).

5. Chariot selon l'une des revendications précédentes, **caractérisé en que** la came (8) est située sensiblement sous le centre de la plateforme (1a).

6. Chariot selon l'une des revendications précédentes, **caractérisé en ce qu'**il comporte des moyens d'indexation (33,34) du levier (3) dans une position intermédiaire d'au moins son pivotement moteur.

7. Chariot selon la revendication 5 et la revendication 6, **caractérisé en ce que** le patin (6) est monté autour d'un axe de pivotement sensiblement perpendiculaire à la bielle (5) qui le porte de sorte qu'en position frein, le patin constitue un pivot du chariot par rapport au sol.

8. Chariot selon l'une des revendications précédentes, **caractérisé en ce que** la bielle (5) est attelée à une traverse (36) pourvue de deux galets montés chacun dans un guide fermé (22,23) autour de la came (8), **en ce que** le patin (6) est porté à coulissement par la traverse (37), perpendiculairement à cette dernière, et **en ce qu'**un pantographe (38) est relié à la traverse (37) et au patin (6) et comporte un ressort pour définir la résistance au coulissement du patin par rapport à la traverse.

## Patentansprüche

1. Förderwagen (1), umfassend eine Rollplattform (1a), einen Starthebel (3) zum Starten des Wagens mit einem ersten Abschnitt (3a), einem zweiten Abschnitt (3b), der mit einem Element (6) für seinen Kontakt mit dem Boden (S) zusammenwirkt, und einem Zwischenabschnitt (3c), der sich zwischen dem ersten und dem zweiten Abschnitt befindet und mit der Plattform (1a) mit einer Verschwenkungsfreiheit gegenüber dieser letztgenannten verbunden ist, wobei der Zwischenabschnitt (3c) des Hebels in einer Antriebsschwenkrichtung von zwei Schwenkrichtungen des Hebels eine Kraft auf die Plattform (1a) ausübt, die die Verschiebung dieser Plattform in eine Richtung bewirkt, die der Antriebsschwenkrichtung des Hebels (3) entspricht, wobei die Verbindung der Plattform und des Hebels eine Gelenkverbindung mit einer Achse (4) ist, die senkrecht zur Richtung der auf den Wagen (1) zu übertragenden Verschiebung ist, wobei das Kontaktelement ein zusammendrückbarer Schuh (6) ist, der zum Boden (S) gerichtet ist, wobei der Förderwagen **dadurch gekennzeichnet ist, dass** der Schuh von dem freien Ende einer Verbindungsstange (5) getragen wird, die an ihrem anderen Ende an dem zweiten Abschnitt (3b) des Hebels angelenkt ist, wobei das freie Ende der Verbindungsstange (5) gleitend an einer unteren Bahn (10) einer Nocke (8) gelagert ist, die fest mit der Plattform (1a) verbunden ist, um das Zusammendrücken des Schuhs (6) bei Auflage auf dem Boden während der Antriebsverschwenkung des Hebels sicherzustellen und zu halten.

2. Wagen nach Anspruch 1, **dadurch gekennzeichnet, dass** die betreffende Bahn (10) eine anfängliche Neigung (12, 13) aufweist, die darauf abzielt, den Schuh fortschreitend zusammenzudrücken, und dann einen im Wesentlichen zum Boden parallelen Abschnitt (10).

3. Wagen nach einem der vorhergehenden Ansprüche, **dadurch gekennzeichnet, dass** die Nocke (8) ferner eine in Bezug auf einen Punkt der unteren Bahn (10) symmetrische obere Bahn (9) aufweist, um den zusammendrückbaren Schuh (6) beim Verschwenken des Hebels (3) in die andere Nichtantriebsrichtung außer Kontakt mit dem Boden zu halten.

4. Wagen nach Anspruch 3, wobei die Neigungen (11, 12) jeder Bahn (9, 10) umkehrbar (13, 14) sind.

5. Wagen nach einem der vorhergehenden Ansprüche, **dadurch gekennzeichnet, dass** sich die Nocke (8) im Wesentlichen unter der Mitte der Plattform (la) befindet.

6. Wagen nach einem der vorhergehenden Ansprüche, **dadurch gekennzeichnet, dass** er Indexierungsmittel (33, 34) zum Indexieren des Hebels (3) in einer Zwischenposition mindestens seiner Antriebsverschwenkung umfasst.

7. Wagen nach Anspruch 5 und Anspruch 6, **dadurch gekennzeichnet, dass** der Schuh (6) um eine Schwenkachse gelagert ist, die im Wesentlichen senkrecht zu einer Verbindungsstange (5) ist, die ihn trägt, so dass der Schuh in der Bremsposition ein Drehgelenk des Wagens gegenüber dem Boden bildet.

8. Wagen nach einem der vorhergehenden Ansprüche, **dadurch gekennzeichnet, dass** die Verbindungsstange (5) an einen Querträger (36) gekoppelt ist, der mit zwei Rollen versehen ist, die jeweils in einer geschlossenen Führung (22, 23) um die Nocke (8) herum gelagert sind, dass der Schuh (6) von dem Querträger (37) senkrecht zu diesem letztgenannten gleitend getragen wird, und dass ein Pantograph (38) mit dem Querträger (37) und dem Schuh (6) verbunden ist und eine Feder umfasst, um den Gleitwiderstand des Schuhs gegenüber dem Querträger zu definieren.

## Claims

1. A trolley (1) including a rolling platform (1a), a lever (3) for starting the trolley with a first portion (3a), a second portion (3b) cooperating with a member (6) through which it is in contact with the ground (S) and an intermediate portion (3c) between the first and second portions, connected to the platform (1a) and free to pivot relative to the latter, the intermediate portion (3c) of the lever exerting a force on the platform (1a) in a driving direction that is one of two pivoting directions of the lever that drives the movement of the latter in a direction corresponding to the driving pivoting direction of the lever (3), the connection between the platform and the lever being an articulation with an axis (4) perpendicular to the direction of movement to be imparted to the trolley (1), the contact member being a compressible pad (6) facing the ground (S), the trolley being **characterised in that** the pad is carried by the free end of a connecting rod (5) articulated by its other end to the second portion (3b) of the lever, the free end of the connecting rod (5) being mounted to slide against a lower track (10) of a cam (8) fastened to the platform (1a) to produce and maintain the compression of the pad (6) bearing on the ground during the driving pivoting of the lever.

2. A trolley according to claim 1 **characterised in that** the track (10) in question has an initial ramp (12, 13) which tends to compress the pad progressively and then a portion (10) substantially parallel to the ground.

3. A trolley according to either one of the preceding claims **characterised in that** the cam (8) also has an upper track (9) symmetrical with respect to a point of the lower track (10) to support the compressible pad (6) out of contact with the ground during pivoting of the lever (3) in its other, non-driving pivoting direction.

4. A trolley according to claim 3, the ramps (11, 12) of each track (9, 10) are reversible (13, 14).

5. A trolley according to any one of the preceding claims **characterised in that** the cam (8) is located substantially under the centre of the platform (1a).

6. A trolley according to any one of the preceding claims **characterised in that** it includes means (33, 34) for indexing the lever (3) in an intermediate position of at least its driving pivoting.

7. A trolley according to claim 5 and claim 6 **characterised in that** the pad (6) is mounted to pivot about an axis substantially perpendicular to the connecting rod (5) which carries it so that in a brake position the pad constitutes a pivot for pivoting of the trolley relative to the ground.

8. A trolley according to any one of the preceding claims **characterised in that** the connecting rod (5) is coupled to a crossmember (36) provided with two rollers each mounted in an enclosed guide (22, 23) around the cam (8), **in that** the pad (6) is slidably carried by the crossmember (37), perpendicularly to the latter, and **in that** a pantograph (38) is connected to the crossmember (37) and to the pad (6) and includes a spring to set the resistance to sliding of the pad relative to the crossmember.
